# EUROPEAN PATENT APPLICATION

(11) **EP 2 781 896 A1**
(43) Date of publication of application: **24.09.2014**
(21) Application number: 12850151.7
(22) Date of filing: 26.10.2012
(51) Int. Cl.: G01F 23/22, G01K 1/14, G21C 17/00, G21C 19/07

(54) **WATER-LEVEL/TEMPERATURE MEASUREMENT DEVICE**

(30) Priority: 14.11.2011 JP 2011249076
(71) Applicant: Kabushiki Kaisha Toshiba, Minato-ku, Tokyo 105-8001 (JP)
(72) Inventor: GOTO, Yusushi, minato-ku, Tokyo 105-8001 (JP); TAKADA, Yuka, Minato-ku, Tokyo 105-8001 (JP); SHIRAISHI, Fujio, Minato-ku, Tokyo 105-8001 (JP); ISODA, Koichiro, Minato-ku, Tokyo 105-8001 (JP); ITO, Toshiaki, Yogoshima-shi, Kanagawa-Ken 235-0032 (JP)
(74) Representative: Kramer - Barske - Schmidtchen
(86) International application number: PCT/JP2012/077747
(87) International publication number: WO 2013/073358

(57) **Abstract**

The water-level and temperature measurement apparatus 10 includes monitoring devices 121, --- , 12n that receives n water-level information and n temperature information, measures n water-levels and n temperatures, and determines whether a water-level detection function and a temperature detection function in each channel are lost or not based on electrical physical quantities, by using water-level and temperature detection devices 111, 112, 113, 114 which includes a detection unit 20 to detect water-level information and temperature information from thermocouple and heater wire, and a calculation processing device 13 that obtains at least one water-level measurement result and at least one temperature measurement result by using n water-level measurement results, n temperature measurement results, water-level detection function loss determination result in each channel, and temperature detection function loss determination result in each channel.

## Description

### Technical Field

The present invention relates to an apparatus that measures water-level and temperature.

### Background Art

A water-level and temperature measurement apparatus applies in various fields. Since the water-level and temperature measurement apparatus has various limitations in accordance with applied field, the water-level and temperature measurement apparatus which has various configurations is devised. For example, the water-level and temperature measurement apparatus used for measuring water-level and temperature, of pool water in a spent fuel storage pool which stores spent fuels in a nuclear power generation plant is limited in an applicable environment.

In the spent fuel storage pool which stores the spent fuel in the nuclear power generation plant, a crane for refueling is installed in an upper portion thereof. Since the crane moves in whole range of an upper portion of the spent fuel storage pool, a space in which a water-level meter and a temperature meter are arranged is severely limited. Further, since a hole cannot be provided in pool wall portion in view of prevention from leaking pool water, difference pressure type measurement method which is generally applied as water-level meter cannot be applied. Furthermore, if an allotrio (exogenous material) falls in the spent fuel storage pool, it is difficult for users to pick up the allotrio from the spent fuel storage pool. Therefore, some actions for preventing from mixing into pool water must be considered.

Under above-mentioned circumstance, for example, as disclosed in Japanese Patent Laid-open Publication No. HEISEI 10-153681 (Patent Document 1), it is devised that the water-level and temperature measurement apparatus which detects water-level and temperature, of pool water impounded in the spent fuel storage pool measuring pool water temperature. The devised water-level and temperature measurement apparatus generates heat used by a heater being provided in a neighborhood of a temperature measurement unit of the temperature meter (chromel-alumel thermocouple), measures temperature, and thereby detects water-level and temperature of pool water. A water-level meter and a temperature meter respectively including one system (1 channel) are provided to conventional water-level and temperature measurement apparatus such as the water-level and temperature measurement apparatus disclosed in the patent document 1. The water-level meter and the temperature meter can measure water-level and temperature if water-level is located in a normal level range.

### Prior Art Document

### Patent Document

Patent Document 1: Japanese Patent Laid-open Publication No. HEISEI 10-153681

### Description of Invention

### Problems to be solved by Invention

Since enforcement of monitoring the spent fuel storage pool is required in recent years, recognition of importance for monitoring system is increased. However, even if the 1 channel of the conventional water-level and temperature measurement apparatus such as the water-level and temperature measurement apparatus disclosed in the patent document 1 only breaks out, the conventional water-level and temperature measurement apparatus completely loses monitoring function of monitoring water-level of pool water and temperature of pool water and thereby becomes a state being impossible to measure water-level of pool water and temperature of pool water. Therefore, the conventional water-level and temperature measurement apparatus does not respond to require monitoring enforcement.

Considering that a water-level instrumentation and a temperature instrumentation, of the spent fuel storage pool is important, even if the 1 channel of the water-level and temperature measurement apparatus only breaks out, the water-level and temperature measurement apparatus should be an apparatus that can avoid becoming a situation where the monitoring function of monitoring water-level of pool water and temperature of pool water is completely lost. It is considered to multiplex system configuration as an example of method that avoids becoming the situation where the monitoring function of monitoring water-level of pool water and temperature of pool water is completely lost.

However, in the water-level meter and the temperature meter of the spent fuel storage pool in the nuclear power generation plant, since system configuration in case of multiplexing system and influence being due to channel malfunction are not considered, even if system configuration is simply multiplexed, an operator (user) may faultily recognize present situation. There may be occurrence possibility of negative influence with respect to plant operation being due to the fault recognition by the user. Accordingly, it is required to take action that detects malfunction channel and removes signal transmitted from the malfunction channel, and consider so as to surely prevent the fault recognition by the user.

The present invention has been made in consideration of the circumstances mentioned above, and an object thereof is to provide a water-level and temperature measurement apparatus that has higher reliability of detecting water-level and temperature than conventional measurement apparatus, and can obtain measurement result.

### Means for solving Problem

In order to solve the problem in the conventional art mentioned above, the present invention provides a water-level and temperature measurement apparatus comprising: a water-level detection unit that detects water-level at a plurality of water-level detection points, and includes a plurality of cannels of which the number is n; a temperature detection unit that detects temperature at the plurality of water-level detection points, and includes the n cannels; a thermocouple that is included in each cannel; a heater wire that is included in each cannel; a measurement device that receives water-level information of which the number is n from the water-level detection unit including the n channels and temperature information of which the number is n from the temperature detection unit including the n channels, in each cannel, and measures water-level of which the number is n and temperature of which the number is n, in each cannel; abnormal determination device that respectively obtains electrical physical quantities from each thermocouple and each heater wire in each channel of the water-level detection unit and the temperature detection unit, and respectively determines whether detection function in each channel of the water-level detection unit and detection function in each channel of the temperature detection unit are lost or not based on the electrical physical quantities obtained from each thermocouple and each heater wire; and processing device that obtains at least one water-level measurement result and at least one temperature measurement result by using results obtained by measuring water-level of which the number is n, results obtained by measuring temperature of which the number is n, results obtained by determining whether detection function in each channel of the water-level detection unit, and results obtained by determining whether detection function in each channel of the temperature detection unit.

### Effect of Invention

According to the present invention, the water-level and temperature measurement apparatus that has high reliability of monitoring water-level and temperature in spent fuel storage pool than conventional measurement apparatus can be provided.

### Brief Description of Drawings

[Fig. 1] is a schematic view illustrating an application example of a water-level and temperature measurement apparatus according to the embodiment.
[Fig. 2] (which includes Fig. 2A and Fig. 2B) is a sectional view of a water-level and temperature detection device used in the water-level and temperature measurement apparatus according to the embodiment. Here, Fig. 2A is a part vertical sectional view, and Fig. 2B is a horizontal sectional view.
[Fig. 3] (which includes Fig. 3A and Fig. 3B) is an enlarged sectional view of peripheral of accommodation tube end in the water-level and temperature detection device used in the water-level and temperature measurement apparatus according to the embodiment. Here, Fig. 3A is a partial sectional view, and Fig. 3B is a horizontal sectional view.
[Fig. 4] is schematic view illustrating a system configuration example of the water-level and temperature measurement apparatus according to the embodiment.
[Fig. 5] is a flowchart which represents processing steps of the water-level and temperature detection apparatus malfunction determination procedure executed in the water-level and temperature measurement apparatus according to the embodiment.
[Fig. 6] is a flowchart which represents processing steps of first water-level and temperature detection function normal/abnormal determination procedure (water-level) executed in the water-level and temperature measurement apparatus according to the embodiment.
[Fig. 7] is a flowchart which represents processing steps of first water-level and temperature detection function normal/abnormal determination procedure (temperature) executed in the water-level and temperature measurement apparatus according to the embodiment.
[Fig. 8] is a flowchart which represents processing steps of second water-level and temperature detection function normal/abnormal determination procedure (water-level) executed in the water-level and temperature measurement apparatus according to the embodiment.
[Fig. 9] is a flowchart which represents processing steps of third water-level and temperature detection function normal/abnormal determination procedure (water-level) executed in the water-level and temperature measurement apparatus according to the embodiment.
[Fig. 10] is a flowchart which represents processing steps of fourth water-level and temperature detection function normal/abnormal determination procedure (water-level) executed in the water-level and temperature measurement apparatus according to the embodiment.
[Fig. 11] is a flowchart which represents processing steps of fifth water-level and temperature detection function normal/abnormal determination procedure (water-level) executed in the water-level and temperature measurement apparatus according to the embodiment.
[Fig. 12] is a flowchart which represents processing steps of sixth water-level and temperature detection function normal/abnormal determination procedure (water-level) executed in the water-level and temperature measurement apparatus according to the embodiment.

### Embodiment for Carrying Out the Invention

Hereunder, an embodiment of the present invention will be described with reference to the accompanying drawings.

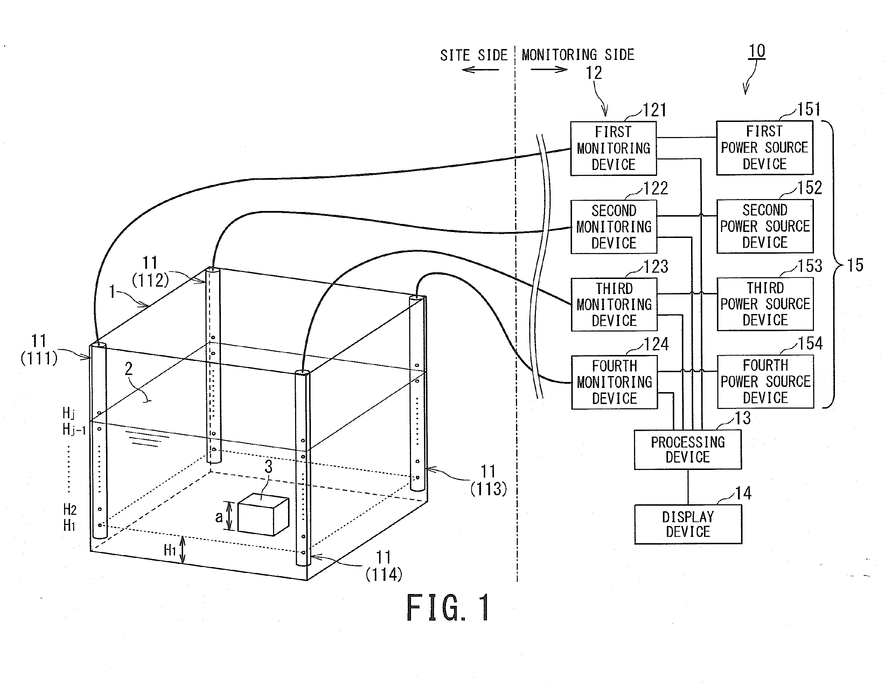

Fig. 1 is a schematic view illustrating an application example of a water-level and temperature measurement apparatus 10 which is an example of a water-level and temperature measurement apparatus according to the embodiment.

The water-level and temperature measurement apparatus 10 is, for example, applied in case of monitoring water-level and temperature such as a case of monitoring water-level and temperature, of pool water 2 impounded in a spent fuel storage pool 1 built in a reactor building (RB) in a nuclear power generation plant. For example, a water-level and temperature detection device 11 (111, 112, 113, 114) that includes independent multi-channels such as four channels is installed to four corners of the spent fuel storage pool 1.

Here, reference numeral 3 is a rack that contains in spent fuel assembly. Further, each reference H₁, H₂, ---, Hj-i, Hj (the j is two or integer being larger than two) is detection point (water-level detection point) to detect water-level of pool water 2, and represents height from bottom plane of the spent fuel storage pool 1. In the water-level and temperature measurement apparatus 10, the water-level detection point H₁ being set in the lowest position in the spent fuel storage pool 1 (the nearest position from a bottom plane of the spent fuel storage pool 1) is set in a position where the water-level detection point H₁ as height from the bottom plane is lower (nearer from the bottom plane) than height "a" which is height from a bottom plane of the spent fuel storage pool 1 to upper plane (surface) of the rack 3. That is, the water-level detection point H₁ is set so as to satisfy a condition a>H₁.

The water-level and temperature detection device 11 (111, 112, 113, 114) includes a water-level detection function and a temperature detection function. Although way for detecting water-level and way for detecting temperature are various, a water-level and temperature detection device illustrated in Fig. 1 and Figs 2 and 3 which are described below is a water-level and temperature detection device that uses thermocouple for water-level and temperature detection. The water-level and temperature detection device 11 illustrated as the water-level and temperature detection device using thermocouple has advantage which can detect both water-level and temperature by one (single) device. Further, because a sheath type thermocouple has advantage which is superior to be resistant in high temperature, high moisture, and high-dose radio active field due to material characteristic thereof, the sheath type thermocouple has advantage which adapts to use under post-accident environment.

The water-level and temperature detection devices 111, 112, 113, 114, as each channel of the water-level and temperature detection device 11, being installed in the site side such as the spent fuel storage pool 1 is respectively connected with each cannel of a monitoring device 12 (121, 122, 123, 124) being installed in the monitoring side being far away from the site, such as a central control room (main control room), and can respectively transmit the information from the water-level and temperature detection devices 111, 112, 113, 114 to the monitoring devices 121, 122, 123, 124. The spent fuel storage pool 1 and neighborhood thereof are unforgiving environment. Therefore, cable of which environmentally-resistant performance is excellent, such as MI (Mineral Insulation) cable is used as a cable respectively connecting the water-level and temperature detection devices 111, 112, 113, 114 to the monitoring devices 121, 122, 123, 124, and thereby possible to transmit the information from the water-level and temperature detection devices 111, 112, 113, 114 to the monitoring devices 121, 122, 123, 124.

In the water-level and temperature measurement apparatus 10 that includes configuration as described above, information detected by the water-level and temperature detection device 11 (111, 112, 113, 114) are respectively transmitted to the monitoring device 12 (121, 122, 123, 124) in each channel corresponding to each channel of the water-level and temperature detection device 11. That is, information detected by a first channel of the water-level and temperature detection device (which will be hereinafter referred to as "first water-level and temperature detection device") 111 is transmitted to a first channel of the monitoring device (which will be hereinafter referred to as "first monitoring device") 121. Cases of second channel, third channel, and fourth channel, are also similar to the case of the first channel. That is, each information detected by second channel of the water-level and temperature detection device (which will be hereinafter referred to as "second water-level and temperature detection device") 112, third channel of the water-level and temperature detection device (which will be hereinafter referred to as "third water-level and temperature detection device") 113, and fourth channel of the water-level and temperature detection device (which will be hereinafter referred to as "fourth water-level and temperature detection device") 114 is respectively transmitted to the second channel of the monitoring device (which will be hereinafter referred to as "second monitoring device") 122, the third channel of the monitoring device (which will be hereinafter referred to as "third monitoring device") 123, the fourth channel of the monitoring device (which will be hereinafter referred to as "fourth monitoring device") 124.

Further, the monitoring devices 121, 122, 123 and 124 are connected with a calculation processing device 13 that receives information from the monitoring devices 121, 122, 123 and 124. The calculation processing device 13 performs determination calculation procedure that determines whether monitor object (which denotes object to be monitored before monitoring procedure and monitored object after monitoring procedure) is normal (sound) state or abnormal (not sound) state based on each information received from the monitoring devices 121, 122, 123 and 124. The calculation processing device 13 is connected with a display device 14 that displays a calculation result calculated by the calculation processing device 13.

Further, in the water-level and temperature measurement apparatus 10, since each monitoring device 121, 122, 123 and 124 is respectively connected to a first power source device 151, a second power source device 152, a third power source device 153 and a fourth power source device 154, one power source is ensured in each channel. As described above, by being provided with individual power source device 15 (151, 152, 153, 154) corresponding to each channel, the water-level and temperature measurement apparatus 10 avoids becoming complete loss of monitoring function accompanying power supply stop.

Incidentally, it is necessarily limited to a case where the calculation processing device 13 and the display device 14 are configured as independent device, the case as illustrated in Fig. 1. For example, the calculation processing device 13 and the display device 14 may be integrally configured by using single (one) equipment such as single computer.

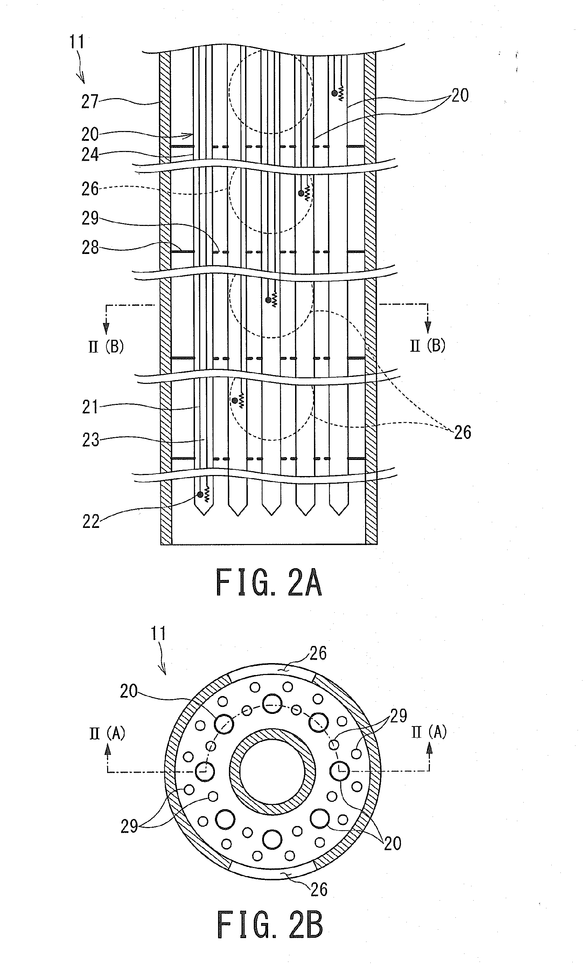

Fig. 2 (which includes Fig. 2A and Fig. 2B) is a sectional view of a water-level and temperature detection device 11 used in the water-level and temperature measurement apparatus 10. Fig. 2A is a part vertical sectional view (II(A)-II(A) sectional view illustrated in Fig. 2B) and Fig. 2B is a horizontal sectional view (II(B)-II(B) sectional view illustrated in Fig. 2A).

The water-level and temperature detection device 11 includes a detection unit 20 that detects water-level information and temperature information. An example of the detection unit 20 includes a sheath type thermocouple 21 that is configured by containing thermocouple such as copper-constantan thermocouple in sheath tube, a heater wire 23 as heat source that can change peripheral temperature of a temperature measurement contact 22 of the sheath type thermocouple 21, and an accommodation tube 24 that accommodates the sheath type thermocouple 21 and the heater wire 23 therein. An example of the temperature measurement contact 22 is a contact made by welding and jointing a copper wire and a constantan wire.

Here, a numeral reference 26 is an opening portion, a numeral reference 27 is a protective tube, a numeral reference 28 is a support member, and a numeral reference 29 is a hole portion. Each opening portion 26 is provided at each height H₁, H₂, ---, Hⱼ₋₁, Hⱼ respectively corresponding to water-level detection points illustrated in Fig. 1.

Since the detection unit 20 is configured as described above, the type thermocouple 21 performs as temperature detection unit that detects temperature information of pool water 2. Further, since the heater wire 23 as heat source gives heat (hot or cold) to the sheath type thermocouple 21 (a peripheral region of the temperature measurement contact 22), the heat given from the heater wire 23 leads to variation of temperature detected by the sheath type thermocouple 21. As a result, the sheath type thermocouple 21 performs as water-level information detection unit that detects whether water is present or not in the peripheral region of the sheath type thermocouple 21 by determining whether the peripheral region is gas or water. The determination method is based on a principle that difference, in change of peripheral temperature due to heat generated in the heater wire 23, is occurred. The cause why the difference is occurred is that gas of thermal conductivity is different from water of thermal conductivity.

That is, the detection unit 20 heat-transmits heat generated in the heater wire 23 as the heat source from the heater wire 23 to the sheath type thermocouple 21 as temperature information detection unit, and thereby enables the sheath type thermocouple 21 as temperature information detection unit to perform as water-level information detection unit. Since the detection unit 20 can perform as water-level information detection unit, the detection unit 20 realizes the water-level information detection function.

Incidentally, it is necessarily required that the thermocouple adopted as temperature information detection function of the detection unit 20 is copper-constantan thermocouple. For example, chromel-alumel (CA) thermocouple may be adopted as an example which is temperature information detection unit of the detection unit 20. Further, the thermocouple adopted as an example which is temperature information detection unit of the detection unit 20 is necessarily limited to the sheath type thermocouple 21.

However, it is preferable that the thermocouple adopted as temperature information detection unit of the detection unit 20 is copper-constantan thermocouple. Further, it is preferable that the thermocouple adopted as temperature information detection unit of the detection unit 20 is sheath type thermocouple being configured by thermocouple being accommodated in sheath tube. In addition, it is further preferable that the thermocouple adopted as temperature information detection unit of the detection unit 20 is sheath type thermocouple being configured by accommodating copper-constantan thermocouple in sheath tube.

The reason why above-described explanation as to preferabilities is that there is requirement from the viewpoint of being possible to detect the water-level of pool water 2 at deep position of the spent fuel storage pool 1 in the water-level and temperature measurement apparatus 10. The requirement is that wires 31 as a component of the thermocouple are installed with a state where wires 31 of the thermocouple are long. That is, the longer wires 31 of the thermocouple are, the larger noise of thermoelectric power detected by the thermocouple is. Therefore, from viewpoint of obtaining larger S/N (Signal to Noise) ratio, the thermocouple that has large thermoelectric power is more preferable as the thermocouple adopted as temperature information detection unit. Further, a load influenced from wires 31 of the thermocouple increases if the wires 31 of the thermocouple become longer. Therefore, a thermocouple being superior to mechanical characteristic is more preferable as the thermocouple adopted as temperature information detection unit.

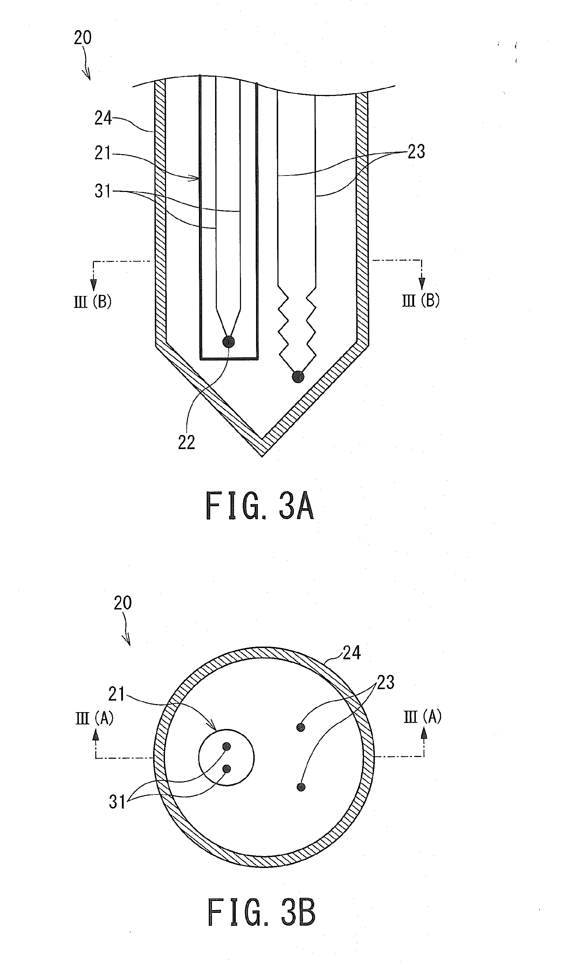

Fig. 3 (which includes Fig. 3A and Fig. 3B) is an enlarged sectional view of peripheral of accommodation tube end in the water-level and temperature detection device 11 used in the water-level and temperature measurement apparatus 10. Here, Fig. 3A is a partial sectional view (III(A)-III(A) sectional view illustrated in Fig. 3B), and Fig. 3B is a horizontal sectional view (III(B)-III(B) sectional view illustrated in Fig. 3A).

The accommodation tube 24 accommodates the sheath type thermocouple 21 and heater wire 23 therein, and is filled up with a magnesium oxide (MgO) which has high thermal conductivity and is insulator. An outer side (surface) of the accommodation tube 24 contacts with pool water and/or atmosphere. The sheath type thermocouple 21 measures temperature of pool water and/or atmosphere through the accommodation tube 24 and the magnesium oxide. Heat (hot or cold) given from the heater wire 23 goes through the accommodation tube 24 and the magnesium, and then is emitted to pool water or atmosphere.

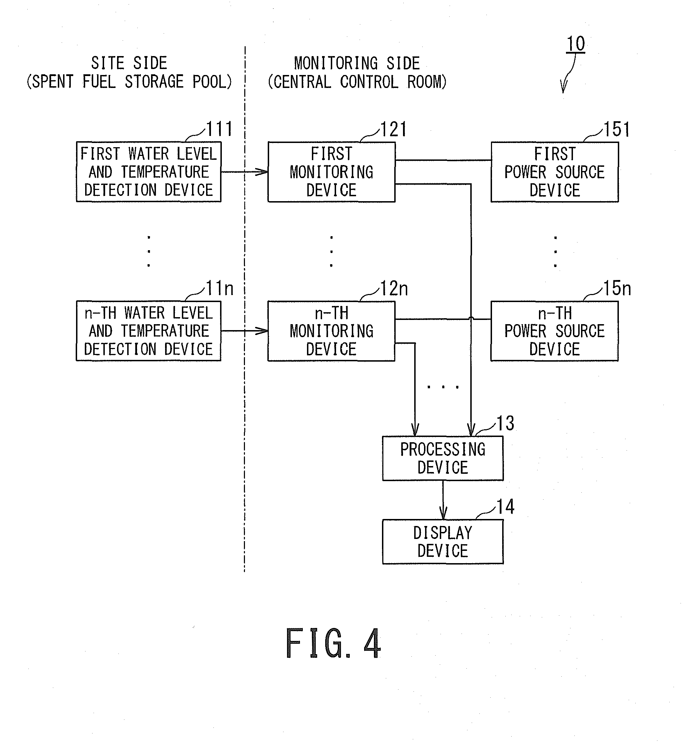

Fig. 4 is schematic view illustrating a system configuration example of the water-level and temperature measurement apparatus 10 which is an example of the water-level and temperature measurement apparatus according to the embodiment.

Incidentally, the n-th water-level and temperature detection device 11n, the n-th monitoring device 12n, and the n-th power source device 15n, illustrated in Fig. 4 are respectively the n-th cannel of the water-level and temperature detection device 11, the n-th cannel of the n-th monitoring device 12, and the n-th cannel of the n-th power source device 15. Hereinafter, if there is necessity of explaining the water-level and temperature detection device 11, the monitoring device 12, and the power source device 15 with distinguishing the cannel of the water-level and temperature detection device 11, the monitoring device 12, and the power source device 15, the n-th cannel of the water-level and temperature detection device 11, the n-th cannel of the n-th monitoring device 12, and the n-th cannel of the n-th power source device 15 are respectively referred to as the n-th cannel of the water-level and temperature detection device 11n, the n-th cannel of the n-th monitoring device 12n, and the n-th cannel of the n-th power source device 15n.

The water-level and temperature measurement apparatus 10 includes: the monitoring device 12 (121, ---, 12n) including independent n (herein, n is arbitrary integer being equal to or larger than 2) channels; the calculation processing device 13 that receives information of result measured by the monitor object and fundamental information of malfunction determination from each monitoring device 121, ---, 12n, and determines that each water-level and temperature detection device 111, ---, 11n obtains proper value (normal value) as the water-level information detection unit and the temperature detector information detection unit or not, and is broken out (malfunction state) or not, on the basis of information received from each monitoring device 121, ---, 12n; and the display device 14 that displays calculation result calculated by the calculation processing device 13. The monitor object measurement result information includes water-level measurement result (water-level measurement values) and temperature measurement result (temperature measurement values). The malfunction determination fundamental information is necessary information to determine whether the water-level and temperature detection device 11 (111, ---, 11n) is broken down (i.e., at least one of water-level and temperature detection functions in each channel, provided by the water-level and temperature detection device 11 is lost) or not.

The water-level and temperature detection device 11 (111, ---, 11n) has a function of detecting the monitor object measurement result information and a function of detecting the malfunction determination fundamental information of own device. The water-level and temperature detection device 11 (111, ---, 11n) as a device that detects the monitor object measurement result information transmits the monitor object measurement result information to the monitoring device 12 (121, ---, 12n) respectively corresponding to the channels. Further, the water-level and temperature detection device 11 (111, ---, 11n) as a device that detects the malfunction determination fundamental information transmits the monitor object measurement result information to the monitoring device 12 (121, ---, 12n) respectively corresponding to the channels.

Here, as an example of the malfunction determination fundamental information, there are a resistance value information of the heater wire used in the water-level and temperature detection device 11 (111, ---, 11n), and an information of voltage difference (e.g. if one of wires is copper wire and the other of wires is constantan wire, voltage difference between copper wire and constantan wire) between wires of the sheath type thermocouple 21. The resistance value information of the heater wire is used to determine state of the heater wire, i.e., whether water-level can be normally detected or not. Further, the voltage difference information between wires of the sheath type thermocouple 21 is used to determine state of the copper-constantan thermocouple, i.e., whether temperature and water-level can be normally detected or not.

If the resistance value of the heater wire is indicated as infinity ∞, it can be determined that own heater wire is broken (disconnected). Therefore, it can be determined that the water-level and temperature detection device 11 (111, ---, 11n) of which the heater wire resistance value is indicated as infinity is broken out (for more detail, loss of the water-level information detection function). Further, there is a case where it can be determined that the heater wire has a possibility of quite deterioration (predictive phenomenon of wire breaking). The case is that the resistance value of the heater wire is indicated as an abnormal value which is not infinity and is larger than an upper limit value (threshold value) being estimated upon normal operation with little temperature increase. The heater wire that is determined whether the heater wire quietly deteriorates may have a possibility of breaking heater wire upon measurement.

Thus, regardless whether the resistance value of the heater wire is infinity or not, if the resistance value of the heater wire is larger than predetermined value (in a case where the resistance value is determined as abnormal value), the water-level and temperature measurement apparatus 10 determines that the water-level and temperature detection device 111, ---, 11n including the heater wire of which the resistance value is indicated as abnormal value loses water-level detection function. That is, it is determined that a state of the water-level and temperature detection device 111, ---, 11n including the heater wire of which the resistance value is indicated as abnormal value is not sound state, i.e., malfunction state.

Incidentally, the water-level and temperature measurement apparatus 10 may determine state of the heater wire with separately distinguishing the case where the resistance value of the heater wire is indicated as infinity from a case (herein, which will be referred to as "abnormal value case") where the resistance value of the heater wire is not indicated as infinity and is indicated as a value being larger than the predetermined value. For example, in the case where the resistance value of the heater wire is indicated as infinity, the water-level and temperature measurement apparatus 10 may determine that the water-level and temperature detection device 111, ---, 11n includes the heater wire of which the resistance value is indicated as infinity is broken out, and therefore exclude the water-level and temperature detection device 111, ---, 11n determined as malfunction state from the temperature detection unit used for measurement. Meanwhile, in the abnormal value case, the water-level and temperature measurement apparatus 10 may determine that the water-level and temperature detection device 111, ---, 11n includes the heater wire becoming preliminary malfunction state, and only output alarm of preliminary malfunction state to the monitoring device 121, ---, 12n.

Meanwhile, if voltage difference between wires of the sheath type thermocouple is not occurred, it can be determined that two wires by which the sheath type thermocouple is configured does not mutually contact. In the water-level and temperature measurement apparatus 10, if voltage difference between wires of the sheath type thermocouple is not occurred, the water-level and temperature measurement apparatus 10 determines that a state of the water-level and temperature detection device 111, ---, 11n including the sheath type thermocouple which does not occur voltage difference between two wires of the sheath type thermocouple is a state (malfunction state) where the temperature detection function and the water-level detection function are lost.

As described above, because the water-level and temperature measurement apparatus 10 has a function of determining whether the water-level and temperature detection device 11 (111, ---, 11n) is broken out or not, the water-level and temperature measurement apparatus 10 prevents the water-level and temperature detection device 111, ---, 11n being determined as malfunction state from being used as the water-level and temperature information detection units upon measurement. Therefore, the water-level and temperature measurement apparatus 10 can only selects and use the water-level and temperature detection device 111, ---, 11n being determined as normal state (not malfunction state) as the water-level and temperature information detection units.

The monitoring device 12 (121, ---, 12n) has a function of measuring water-level based on the water-level information respectively obtained from each water-level and temperature detection device 11 (111, ---, 11n), a function of measuring temperature based on the temperature information respectively obtained from each water-level and temperature detection device 11 (111, ---, 11n), and a function of determining whether the water-level and temperature detection device 11 (111, ---, 11n) does not run out of order (malfunction state) or not (sound state).

The monitoring device 121, ---, 12n is respectively connected with the water-level and temperature detection device 111, ---, 11n. That is, the first monitoring device 121 measures water-level and temperature based on water-level information and temperature information that are obtained from the first water-level and temperature detection device 111, and determines whether the first water-level and temperature detection device 111 is broken out or not (sound state). The other monitoring device such as the monitoring device 12n also performs the same operations as those of the first monitoring device 121. That is, the n-th monitoring device 12n measures water-level and temperature based on water-level information and temperature information that are obtained from the n-th water-level and temperature detection device 11n, and determines whether the n-th water-level and temperature detection device 11n is broken out or not (sound state).

Further, the monitoring device 121, ---, 12n transmits the water-level and temperature measurement results, determination result whether each water-level and temperature measurement results obtained from the water-level and temperature detection device 11 (111, ---, 11n) is normal or not, and determination result whether the water-level and temperature detection device 11 (111, ---, 11n) being connected with own monitoring device 12 (121, ---, 12n) is broken out or not (sound state) to the calculation processing device 13.

Furthermore, the monitoring device 12 (121, ---, 12n) includes a display unit (not illustrated) that displays information as arbitrary component, in view of user-friendliness improvement for monitor. The monitoring device 12 (121, ---, 12n) including the display unit can display the water-level and temperature measurement results, determination whether the obtained water-level and temperature measurement results are normal or not, and determination whether the water-level and temperature detection device 11 (111, ---, 11n) being connected with own monitoring device 12 (121, ---, 12n) is broken out or not in the display unit.

The calculation processing device 13 determines the water-level and temperature detection device 11 (111, ---, 11n) that is broken out based on the determination result whether the water-level and temperature detection device 11 (111, ---, 11n) is broken out or not, the determination result which is received from the monitoring devices 121, ---, 12n as each cannel of the monitoring device 12 (121, ---, 12n). Further, the calculation processing device 13 determines whether measurement values obtained from the monitoring devices 121, ---, 12n are normal or not, and thereby determines whether each water-level and temperature detection device 111, ---, 11n is proper (normal) as the water-level information detection unit and the temperature information detection unit based on the water-level measurement result, the temperature measurement result, and the determination result whether the water-level and temperature detection device 11 (111, ---, 11n) is broken out or not, which are received from each monitoring device 121, ---, 12n.

Further, the calculation processing device 13 can hold or store information received from the monitoring device 12 (121, ---, 12n) and calculation processing result performed in the calculation processing device 13 in predetermined storage of own device or at least one device being connected therewith. The calculation processing device 13 can also transmit the information received from the monitoring device 12 (121, ---, 12n) and the calculation processing result to the at least one device being connected therewith, and display the information received from the monitoring device 12 (121, ---, 12n) and the calculation processing result in a display unit which has a display function, such as the display device 14. In addition, if the calculation processing device 13 determines that water-level and temperature measurement values are improper (abnormal), the calculation processing device 13 may output an alarm of abnormal measurement value or display the alarm in the display device 14.

Furthermore, in the water-level and temperature measurement apparatus 10, whole of information such as information used to display are not necessarily used. The information used to display can be selected as necessary. For example, in case of displaying measurement result in the display unit or the display device 14, the measurement result in the display unit or the display device 14 may be measurement value only picking up measurement value obtained from channel that is determined as sound (normal) state, measurement value only picking up measurement value obtained from channel that is determined as not sound (abnormal) state, and all measurement values with determination result whether measure result is normal or abnormal.

The display device 14 displays information received from the monitoring device 12 (121, ---, 12n) and calculation processing result performed in the calculation processing device 13. In the water-level and temperature measurement apparatus 10, the display device 14, for example, displays water-level measurement values in first to n-th channels, determination result whether the water-level measurement values are proper (normal) as water-level measurement value or not, temperature measurement values in first to n-th channels, determination result whether the temperature measurement values are proper (normal) as temperature measurement value or not, and determination result whether the water-level and temperature detection device 11 (111, ---, 11n) is broken out or not.

By the way, in the water-level and temperature measurement apparatus 10, each monitoring device 121, ---, 12n is respectively connected with the power source device 151, ---, 15n. Here, 1 to n number affixed in the end (the rightmost digit) of numeral references 11, 12, and 15 corresponds to the channel. That is, if the number affixed in the end of numeral references 11, 12, and 15 is 1, the channel is first channel. Further, if the number affixed in the end of numeral references 11, 12, and 15 is n (herein, n is arbitrary integer being equal to or lager than 2), the channel is n-th channel. In explanation described hereunder, the n-th channel of water-level and temperature detection device 11, the n-th channel of the monitoring device 12, and the n-th channel of power source device 15 will be respectively referred to as "the n-th water-level and temperature detection device 11n", "the n-th monitoring device 12n" and "the n-th power source device 15n".

As described above, in the water-level and temperature measurement apparatus 10, since each monitoring device 121, ---, 12n is provided with n power source devices 151, ---, 15n respectively corresponding to each monitoring device 121, ---, 12n, the water-level and temperature measurement apparatus 10 ensures one power source with respect to one monitoring device. Therefore, even if some channels cannot supply the monitoring device 12 with power, the water-level and temperature measurement apparatus 10 can avoid complete loss of monitoring function accompanying power supply stop. That is, residual channel obtained by excluding some channels that stop supplying the monitoring device 12 with power from all channels.

Further, the water-level and temperature measurement apparatus 10 has the function of determining whether the water-level and temperature detection device 11 (111, ---, 11n) is broken out or not based on information of the monitor object and information of the fundamental malfunction determination that are obtained from the water-level and temperature detection device 11 (111, ---, 11n), and the function of determining whether water-level value which is measured on the basis of the water-level information detected by the water-level and temperature detection device 11 (111, -- -, 11n) and temperature value which is measured on the basis of the temperature information detected by the water-level and temperature detection device 11 (111, ---, 11n) are proper measurement value (normal value) or not (abnormal value). Therefore, the water-level and temperature measurement apparatus 10 can determine whether the water-level information and the temperature information are properly detected in each channel and whether each measurement result is proper, select proper measurement result, and provide user with the proper measurement result.

That is, according to the water-level and temperature measurement apparatus 10, the water-level and temperature measurement apparatus 10 can detect channel of water-level detection unit and temperature detection unit which improperly perform water-level information detection and temperature information detection, and exclude the water-level information and the temperature information which are obtained from the cannel detected as cannel performing improper water-level and temperature information detections. Therefore, the water-level and temperature measurement apparatus 10 can achieve sure avoidance of wrong determination (recognition) by user.

Incidentally, above-described explanation of the water-level and temperature measurement apparatus 10 is that the monitoring device 12 (121, ---, 12n) determines whether the water-level and temperature detection device 11 (111, ---, 11n) is broken out or not, and transmits determination result whether the water-level and temperature detection device 11 (111, ---, 11n) is broken out or not to the calculation processing device 13 as an example. However, the monitoring device 12 (121, ---, 12n) may transmit the malfunction determination fundamental information obtained from each water-level and temperature detection device 11 (111, ---, 11n) to the calculation processing device 13 without determining whether the water-level and temperature detection device 11 (111, ---, 11n) is broken out or not. In this case, the calculation processing device 13 determines whether the water-level and temperature detection device 11 (111, ---, 11n) is broken out or not.

Further, in explanation described above, the water-level and temperature measurement apparatus 10 that includes the display device 14 is illustrated as an example. However, it is necessarily required that the water-level and temperature measurement apparatus 10 includes the display device 14. If the water-level and temperature measurement apparatus 10 includes the display device 14, in monitoring operation, there is a preferable point (an advantage) that user (operator) can look (determine) measurement result in the plurality of channels of the water-level and temperature measurement apparatus 10 as a whole. This is the reason why the water-level and temperature measurement apparatus 10 includes the display device 14.

Next, a water-level and temperature detection apparatus malfunction determination procedure that determines whether the water-level and temperature detection device 11 (111, 112, 113, 114) is broken out (malfunction state) or not (sound state) will be described.

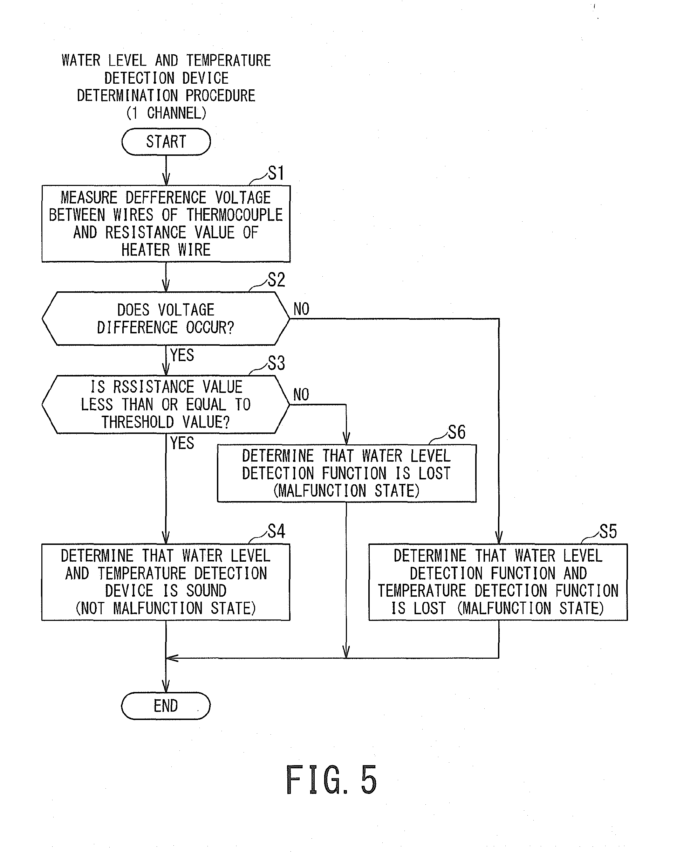

Fig. 5 is a flowchart which represents processing steps of the water-level and temperature detection device malfunction determination procedure (hereinafter, for the sake of simplifying description, which will be mostly abbreviated to as "malfunction determination procedure").

The malfunction determination procedure is performed by at least one device that directly or indirectly obtains monitor object information from the water-level and temperature detection device 11 (111, ---, 11n) that detects water-level information and temperature information, as monitor object information. That is, the malfunction determination procedure is performed by the at least one of the monitoring device 12 (121, ---, 12n) and the calculation processing device 13.

In the water-level and temperature measurement apparatus 10, each monitoring device 121, ---, 12n is an example of device that performs the malfunction determination procedure. If each monitoring device 121, ---, 12n receives command to start the malfunction determination procedure, each monitoring device 121, ---, 12n independently starts the malfunction determination procedure (START). In step S1, each monitoring device 121, ---, 12n independently measures voltage difference between two wires of the sheath type thermocouple and resistance (resistance value) of the heater wire. Here, the sheath type thermocouple and the heater wire are included in each water-level and temperature detection device 111, ---, 11n monitored by each monitoring device 121, ---, 12n. That is, in case of the monitoring device 12n, the sheath type thermocouple and the heater wire are included in water-level and temperature detection device 11n monitored by the monitoring device 12n.

As a result of measurement, if it is satisfied with a condition that voltage difference between two wires of sheath type thermocouple is occurred (in case of "YES" in Step S2) and a condition that resistance value of the heater wire is equal to or less than set value (threshold value) (in case of "YES" in Step S3), the monitoring device 12 (121, ---, 12n) determines that the water-level and temperature detection device 111, ---, 11n satisfying the conditions is normal (not malfunction state).

Meanwhile, as a result of measurement, if voltage difference between two wires of sheath type thermocouple is not occurred (in case of "NO" in Step S2), the monitoring device 12 (121, ---, 12n) determines that the water-level detection function and the temperature detection function are lost, transmits the determination result to the calculation processing device 13, and displays the determination result in display unit of own monitoring device 121, ---, 12n (Step S5). Further, if voltage difference between two wires of sheath type thermocouple is occurred (in case of "YES" in Step S2) and resistance value of the heater wire is larger than set value (threshold value) (in case of "NO" in Step S3), the monitoring device 12 (121, ---, 12n) determines that the water-level detection function is lost, transmits the determination result to the calculation processing device 13, and displays the determination result in display unit of own monitoring device 121, ---, 12n (Step S6).

After the step S4, S5, or S6 is completed, all steps in the malfunction determination procedure are completed. That is, the malfunction determination procedure (Steps S1a-S6) is finished (END).

There is a water-level and temperature detection function normal/abnormal determination procedure that determines whether the water-level and temperature detection device 11 (111, ---, 11n) is sound (normal) state or not (abnormal state) as water-level detection unit and temperature detection unit. In other words, the water-level and temperature detection function normal/abnormal determination procedure is a procedure that determines whether a water-level detection function and a temperature detection function, in each channel of the water-level and temperature measurement apparatus 10, are sound (normal) state. Next, the water-level and temperature detection function normal/abnormal determination procedure will be described.

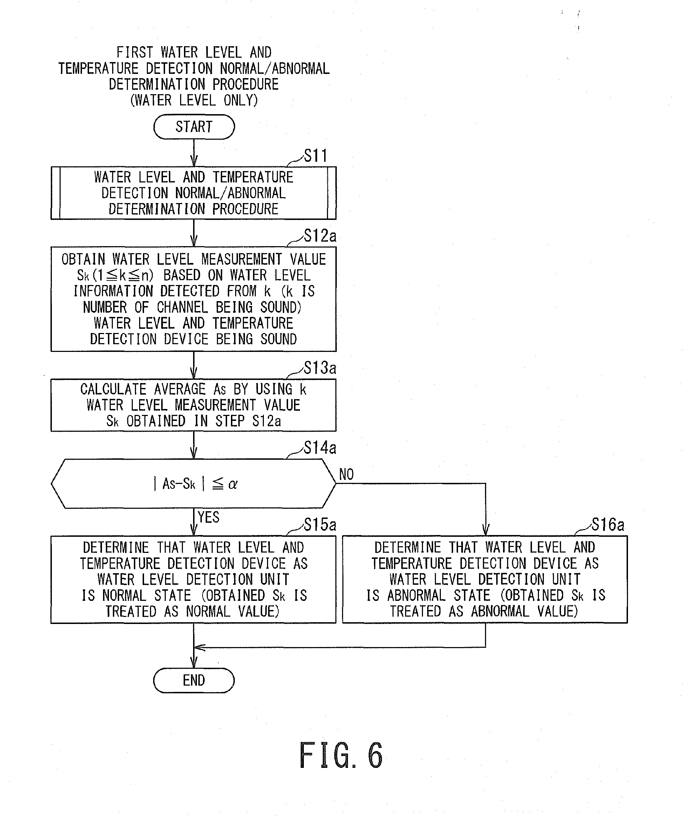

The water-level and temperature detection function normal/abnormal determination procedures, for example, are performed by the calculation processing device 13. The water-level and temperature detection function normal/abnormal determination procedures are performed on the basis of measurement information of water-level and temperature that are received from each monitoring device 121, ---, 12n corresponding to each channel of the monitoring device 12 and information of determination result whether the water-level and temperature detection device 11 (111, ---, 11n) is broken out. As illustrated in Figs 6 to 12 which are described below, there are various determination ways (logics) as the water-level and temperature detection function normal/abnormal determination procedures performed by the water-level and temperature measurement apparatus 10.

### (First water-level and temperature detection function normal/abnormal determination procedure)

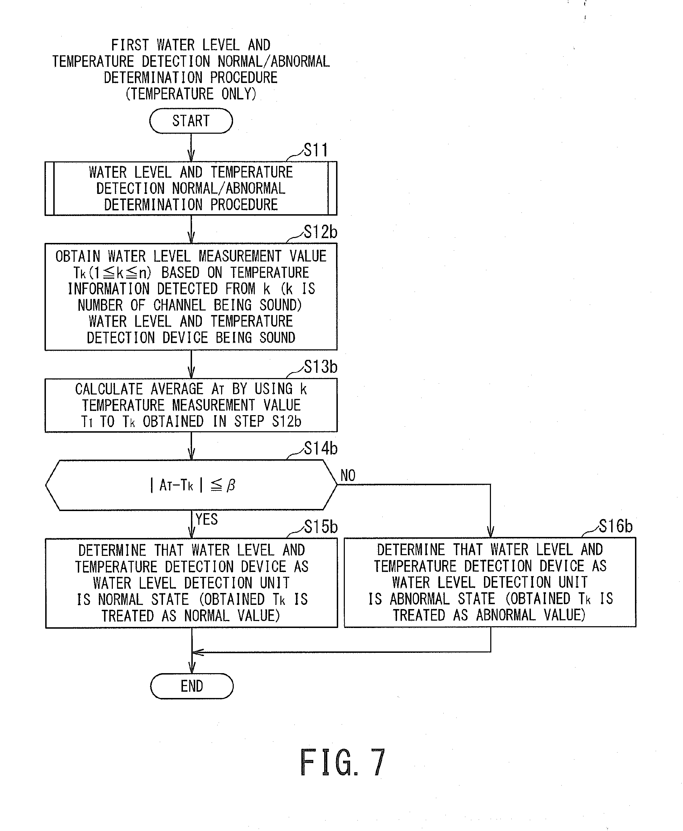

Figs. 6 and 7 are flowcharts which represents processing steps of first water-level and temperature detection function normal/abnormal determination procedure (hereinafter, for the sake of simplifying description, which will be mostly abbreviated to as "first procedure").

Incidentally, although processing steps regarding water-level detection are substantially equal to processing steps regarding temperature detection, there may be a case where it is required to distinguish the processing steps regarding water-level detection from the processing steps regarding temperature detection. In this case, the water-level detection processing steps are distinguished from the temperature detection processing steps by adding "a" to the end of step number in the water-level detection processing steps, and "b" to the end of step number in the temperature detection processing steps. The other water-level and temperature detection function normal/abnormal determination procedures which are described hereinafter will be distinguished the same way as the first procedure.

The water-level detection processing steps (Fig. 6) in the first procedure (S11-S16) are steps S11, S12a, S13a, S14a, S15a, and S16a. In the first procedure, the steps S11, S12a, S13a, S14a, S15a, and S16a are performed, hence it is determined whether the water-level and temperature detection device 11 (111, ---, 11n) is proper (normal state) as the water-level detection unit or not (abnormal state).

The calculation processing device 13 receives command to start the water-level and temperature detection function normal/abnormal determination procedure such as the first procedure, and then starts to perform the water-level and temperature detection function normal/abnormal determination procedure (START). In the step S11, the calculation processing device 13 performs the malfunction determination procedure, and thereby identifies the water-level and temperature detection device 11 that is broken out (Step S11).

After the calculation processing device 13 identifies the water-level and temperature detection device 11 that is broken out, the calculation processing device 13 subsequently obtains k water-level measurement values Sₖ as measurement result information that is results of measuring water-level based on water-level information detected by k channels of the water-level and temperature detection device 11, the channels are not failed state (Step S12a). Subsequently, the calculation processing device 13 uses k water-level measurement values Sₖ obtained in the step S12a, and thereby calculates an average value As of k water-level measurement values Sₖ. Here, k is arbitrary integer which is satisfied with a condition "1≦k≦n".

Subsequently, an absolute value of difference between the average value As and the water-level measurement values Sₖ is calculated. If the absolute value is larger than a threshold value (which is arbitrary positive number α (alpha)) for use in determination of the first procedure, that is, if a condition " | Aₛ-Sₖ | ≦ α " is satisfied (in case of "YES" in Step S 14a), the calculation processing device 13 determines that the water-level information which is based on the water-level measurement value Sₖ in case of "YES" in Step S14a and is obtained by the monitoring device 12, is proper. As a result, the calculation processing device 13 determines that the water-level and temperature detection device 11 monitored by the monitoring device 12 that obtains water-level information determined as property, is normal as the water-level detection unit (Step S15a).

Further, if an absolute value of difference between the average value As and the water-level measurement values Sₖ is larger than the determination threshold value α, that is, if a condition "|Aₛ-Sₖ|> α " is satisfied (in case of "NO" in Step S14), the calculation processing device 13 determines that the water-level information which is based on the water-level measurement value Sₖ in case of "NO" in Step S14 and is obtained by the monitoring device 12, is improper. As a result, the calculation processing device 13 determines that the water-level and temperature detection device 11 monitored by the monitoring device 12 that obtains water-level information determined as improperty, is abnormal (not normal) as the water-level detection unit (Step S16a).

The steps S14a, S15a, and S16a are performed with respect to each water-level measurement value S₁, ---, Sₖ. If the step S15a or S16a is completed with respect to all of water-level measurement values S₁, ---, Sₖ, all steps of the water-level detection processing steps (S11a-S16a) in the first procedure are completed. That is, the water-level detection processing steps (S11a-S16a) in the first procedure (only water-level) are finished (END).

It is noted that determination threshold value used in the step of the water-level and temperature detection function normal/abnormal determination procedure, such as α can be arbitrarily set by user. The determination threshold values can be reset (changed) as necessary. Further, if different threshold values are prepared, user may select arbitrary one determination threshold value from the different determination threshold values being prepared before performing the water-level and temperature detection function normal/abnormal determination procedure. Namely, the determination threshold value is held in a memory in the calculation processing device 13 or a storage region being data-readably connected with the calculation processing device 13.

Meanwhile, the temperature detection processing steps (Fig.7) in the first procedure (S11-S16) are steps S11, S12b, S13b, S14b, S15b, and S16b. The temperature detection processing steps are different from water-level detection processing steps in a point that the temperature detection processing steps include the steps S12b, S13b, S14b, S15b, and S16b instead of the steps S12a, S13a, S14a, S15a, and S16a of the water-level detection processing steps, in more detail, the temperature detection processing steps are performed with using the temperature measurement values Tₖ instead of the water-level measurement values Sₖ.

In other words, if the water-level measurement values Sₖ in the water-level detection processing steps (Fig. 6) is replaced with the temperature measurement values Tₖ, the average As of the water-level measurement values Sₖ in the water-level detection processing steps (Fig. 6) is replaced with the average AT of the temperature measurement values Tₖ, the threshold value α being utilized to determine whether water-level is normal or not (abnormal) in the water-level detection processing steps (Fig. 6) is replaced with the threshold value β (beta) being utilized to determine whether temperature is normal or not (abnormal), the water-level detection processing steps (Fig. 6) become the temperature detection processing steps (Fig. 7).

Namely, in above-described explanation of the first procedure, a case where the first procedure includes the malfunction determination procedure (Step S11) is described as an exampled. However, it is necessarily required that the step S11 is performed in the first procedure. If the malfunction determination procedure (Step S11) has already been completed, a step of reading out a result obtained by previously performing the step S11 may be performed before the step S12 is performed instead of being performed the step S11.

Further, although the first procedure explained above is an example which is separately explained the water-level detection processing steps and the temperature detection processing steps, a case (performed by multitask processing) of performing the water-level detection processing steps in parallel with the temperature detection processing steps is not excluded from the first procedure. That is, the first procedure may be performed by multitask processing, and be performed the water-level detection processing steps in parallel with the temperature detection processing steps.

### (Second water-level and temperature detection function normal/abnormal determination procedure)

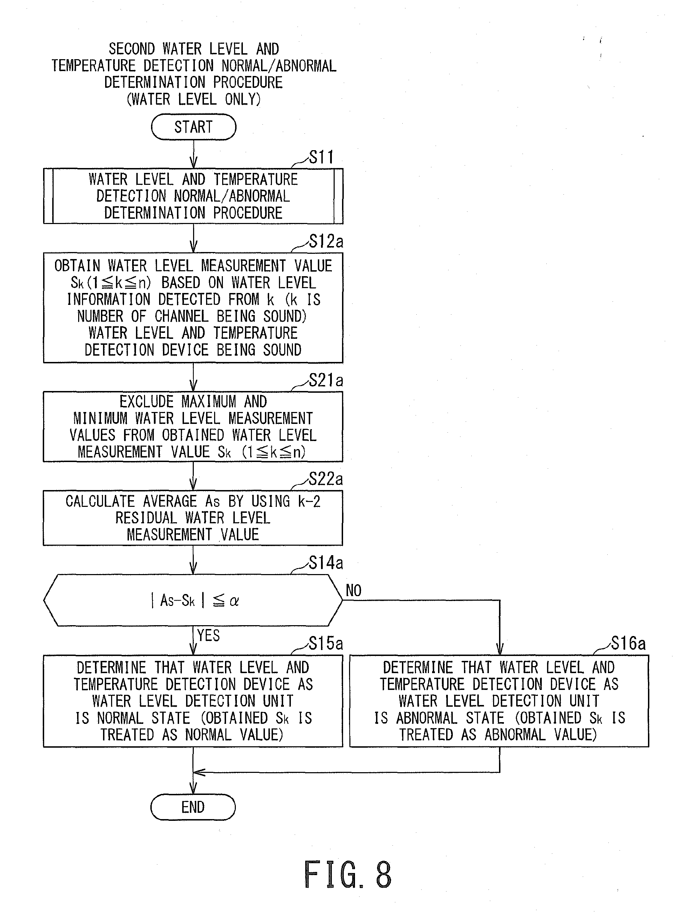

Fig. 8 is a flowchart (water-level only) which represents processing steps of second water-level and temperature detection function normal/abnormal determination procedure (hereinafter, for the sake of simplifying description, which will be mostly abbreviated to as "second procedure").

The second procedure includes the same procedure as in the first procedure except that the second procedure further includes a step of excluding two measurement values which are maximum and minimum measurement values of k obtained measurement values from k obtained measurement values, and calculates average of k-2 measurement value(s) which is/are residual measurement value by excluding from k measurement values upon calculating average of measurement values. Thus, it is noted that the same processing steps in the second procedure are assigned to the same or similar steps as those in the first procedure, and the duplicated description thereof is omitted (not described).

Further, a relation between the water-level detection processing steps and the temperature detection processing steps are mutually replaceable relation. That is, if the water-level measurement values Sₖ is replaced with the temperature measurement values Tₖ, the average As of the water-level measurement values Sₖ is replaced with the average AT of the temperature measurement values Tₖ, the threshold value α is replaced with the threshold value β, the water-level detection processing steps become the temperature detection processing steps. Contrarily, if the temperature measurement values Tₖ is replaced with the water-level measurement values Sₖ, the average AT of the temperature measurement values Tₖ is replaced with the average As of the water-level measurement values Sₖ, the threshold value β is replaced with the threshold value α, the temperature detection processing steps become the water-level detection processing steps. In consideration of above-described relation, the water-level detection processing steps will only be described in the second procedure and third to sixth procedures that are described below. The temperature detection processing steps will be omitted in the second to sixth procedures by replacing as described above.

As is the case with the first procedure, the steps S11 and S12a are performed in the second procedure. After k water-level measurement value(s) S₁, ---, Sₖ is/are obtained by performing the steps S11 and S12a, the calculation processing device 13 excludes two measurement values which are maximum and minimum measurement values of k obtained measurement value(s) S₁, ---, Sₖ from k obtained measurement value(s) S₁, ---, Sₖ (Step S21a).

After two water-level measurement values are excluded, the calculation processing device 13 performs an average calculation processing step being similar to the step S13a with using k-2 water-level measurement value(s) which is/are residual measurement value by excluding two water-level measurement values from k measurement values, thereby calculates the average As of k-2 water-level measurement value(s) (Step S22a). After the step S22a is completed, the second procedure proceeds to the step S14a. The step S14 and the steps being later than the step S14 in the second procedure are the same steps as those of the first procedure.

There is a reason why maximum and minimum measurement values are excluded from obtained measurement values in some procedures including the second procedure. The reason is that water-level and temperature detection function normal/abnormal determination procedure having higher reliability can be performed even if signal reduction being due to reason such as wire-disconnection, or obtained measurement results includes abnormal measurement result being due to increasing signal.

Further, there is the reason why a calculation process is performed with using k obtained water-level measurement values including excluded two water-level measurement values in step S14a. The reason is that normal/abnormal determination is again performed in consideration of possibility that excluded two water-level measurement values may not be abnormal value.

### (Third water-level and temperature detection function normal/abnormal determination procedure)

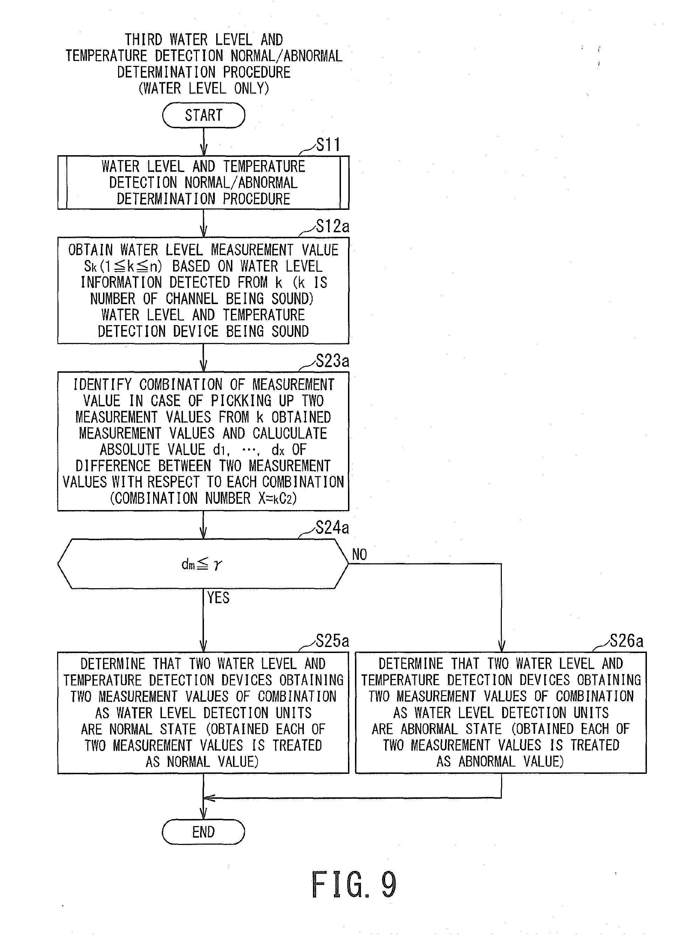

Fig. 9 is a flowchart (water-level only) which represents processing steps of third water-level and temperature detection function normal/abnormal determination procedure (hereinafter, for the sake of simplifying description, which will be mostly abbreviated to as "third procedure").

The third procedure includes the same procedure as in the first procedure except calculation process steps performed with using k obtained measurement. For more detail, the third procedure is different from the first procedure in a point that the steps S23 to S26 (both steps S23a to S26a illustrated Fig. 9 and steps S23b to S26b being omitted (not illustrated) by substituting step numbers S24b to S26b for step numbers S24a to S26a illustrated Fig. 9) instead of the steps S13 to S16 (both steps S13a to S16a illustrated Fig. 6 and steps S13b to S16b being omitted (not illustrated) by substituting step numbers S13b to S16b for step numbers S13a to S16a illustrated Fig. 6) in the first procedure are performed in the third procedure. Thus, it is noted that the same processing steps in the third procedure are assigned to the same or similar steps as those in the first procedures, and the duplicated description thereof is omitted (not described).

In the third procedure, the calculation processing device 13 obtains k water-level measurement values S₁, ---, Sₖ by performing the steps S11 and S12a as is the case with the first procedure. In the step S23a following the step S12a, the calculation processing device 13 identifies combination of measurement values in case of picking up two arbitrary measurement values from k obtained measurement values, and calculates absolute values d₁, ---, dx of difference between two measurement values with respect to each combination (Step S23a).

Assumed that the number of combination in case of picking up two arbitrary measurement values from k obtained measurement values is X, an equation X = _{K}C₂ is satisfied. In the step S23, absolute values of difference between two measurement values with respect to each combination are obtained, and the number thereof are X. Here, each absolute values obtained in the step S23 is represented as dₘ = d₁, ---, dx, wherein m is arbitrary integer being satisfied with 1≦m≦X.

After X absolute values dₘ = d₁, ---, dx of difference between two measurement values with respect to each combination are obtained, the calculation processing device 13 compares each absolute values dₘ = d₁, ---, dx with a threshold value γ (gamma) that is set for the purpose of using in determination of the third procedure. If the absolute value dₘ is equal to or less than the threshold value γ (in case of "YES" in Step S24), the calculation processing device 13 determines that the water-level information which is based on the water-level measurement values as component of the absolute value in case of "YES" in Step S24 and is obtained by the monitoring device 12, is proper. As a result, the calculation processing device 13 determines that the water-level and temperature detection device 11 monitored by the monitoring device 12 that obtains water-level information determined as proper water-level information, is normal as the water-level detection unit (Step S25).

Meanwhile, a result of each absolute values dₘ = d₁, ---, dx comparing with the determination threshold value γ, if the absolute value dₘ is larger than the threshold value γ (in case of "NO" in Step S24), the calculation processing device 13 determines that the water-level information which is based on the water-level measurement values that leads to the absolute value in case of "NO" in Step S24 and is obtained by the monitoring device 12, is improper. As a result, the calculation processing device 13 determines that the water-level and temperature detection device 11 monitored by the monitoring device 12 that obtains water-level information determined as improper water-level information, is abnormal (not normal) as the water-level detection unit (Step S26a).

There is a reason why the calculation processing device 13 identifies combination of measurement values in case of picking up two arbitrary measurement values from k obtained measurement values, calculates absolute values of difference between two measurement values with respect to each combination, and determines whether each absolute values belongs in predetermined range or not in some procedures including the third procedure. The reason is that the water-level and temperature detection function normal/abnormal determination procedure having higher reliability can be performed even if signal reduction being due to reason such as wire-disconnection, or obtained measurement results includes abnormal measurement result being due to increasing signal. The third procedure is more effective than the second procedure if there are there or more measurement values determined as abnormal value.

### (Fourth water-level and temperature detection function normal/abnormal determination procedure)

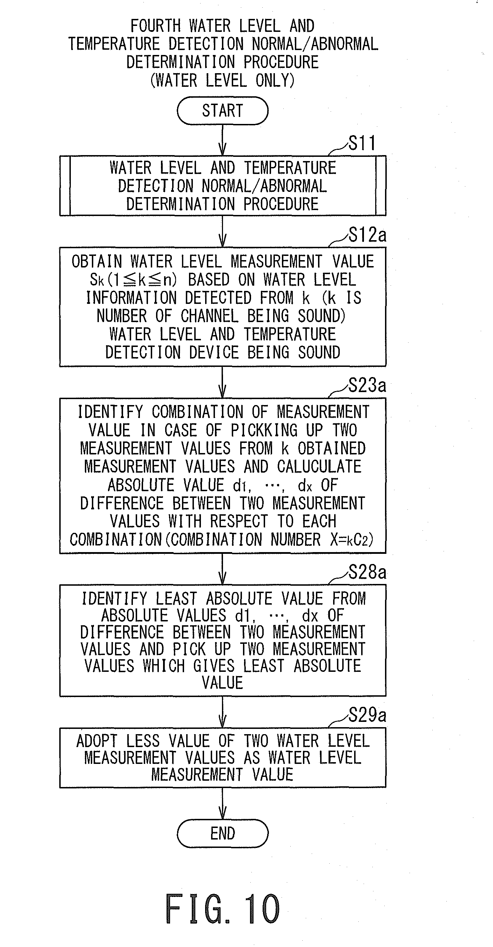

Fig. 10 is a flowchart (water-level only) which represents processing steps of fourth water-level and temperature detection function normal/abnormal determination procedure (hereinafter, for the sake of simplifying description, which will be mostly abbreviated to as "fourth procedure").

The fourth procedure includes the same procedure as in the third procedure except determination steps performed with using the absolute value(s) d₁, ---, dx obtained in step S23. For more detail, the fourth procedure is different from the third procedure in a point that the steps S28 and S29 (both steps S28a and S29a illustrated Fig. 10 and steps S28b and S29b being omitted (not illustrated) by substituting step numbers S28b and S29b for step numbers S28a and S29a illustrated Fig. 10) instead of the steps S24 to S26 (both steps S24a to S26a illustrated Fig. 9 and steps S24b to S26b being omitted (not illustrated) by substituting step numbers S24b to S26b for step numbers S24a to S26a illustrated Fig. 9) in the third procedure are performed in the fourth procedure. Thus, it is noted that the same processing steps in the fourth procedure are assigned to the same or similar steps as those in the third procedures, and the duplicated description thereof is omitted (not described).

In the fourth procedure, while the calculation processing device 13 obtains the absolute value(s) dₘ (=d₁, ---, dx) by performing the steps S11 to S23a as is the case with the third procedure, in the step S28a following the step S23a, the calculation processing device 13 identifies minimum value in absolute value(s) d₁, ---, dx of difference between two measurement values, and picks up two measurement values in a case where minimum value is selected from absolute value(s) d₁, ---, dx of difference between two measurement values. The calculation processing device 13 adopts less (smaller) one from two water-level measurement values picked up in the step S28 as the water-level measurement value (Step S29).

Incidentally, there is a reason why two measurement values are identified in a case where absolute value of difference between two measurement values is minimum value in some procedures including the fourth procedure. The reason is that a combination of measurement value in the case where absolute value of difference between two measurement values is minimum value is considered as a combination having the lowest possibility including normal value in all combinations. Further, although the water-level and temperature measurement apparatus 10 can select arbitrary one measurement value from obtained two measurement value, it is preferable for the water-level and temperature measurement apparatus 10 to select one measurement value so that the monitor object becomes safer.

For example, in a case where the water-level and temperature measurement apparatus 10 is used to measure water-level and temperature, of pool water in a spent fuel storage pool which stores spent fuels, and monitors the water-level and temperature, it is preferable that the water-level and temperature measurement apparatus 10 can detect drawdown (water-level lowering) and temperature increase, of pool water at an earlier stage. Therefore, as to water-level, it is preferable to adopt less one from two water-level measurement value which is component of the identified combination. Further, as to temperature, it is preferable to adopt higher one from two temperature measurement value which is component of the identified combination.

### (Fifth water-level and temperature detection function normal/abnormal determination procedure)

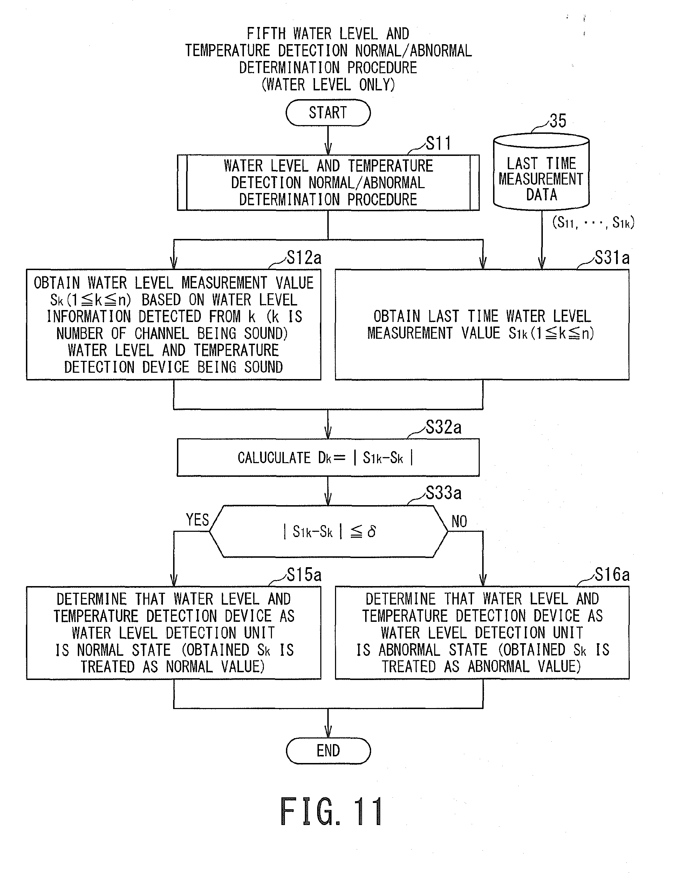

Fig. 11 is a flowchart (water-level only) which represents processing steps of fifth water-level and temperature detection function normal/abnormal determination procedure (hereinafter, for the sake of simplifying description, which will be mostly abbreviated to as "fifth procedure").

The fifth procedure includes the same procedure as in the first procedure except that the fifth procedure includes steps (both steps S31a and S32a illustrated Fig. 11 and steps S31b and S32b being omitted (not illustrated) by substituting step numbers S31b and S32b for step numbers S31a and S32a illustrated Fig. 11) of comparing measurement values measured in this time with measurement values measured in last (previous) time instead of steps (steps S13 and S14, i.e., both steps S13a and S14a illustrated in Fig. 6 and steps S13b and S14b illustrated in Fig. 7) of comparing the average of k obtained measurement value with each k obtained measurement value(s). Thus, it is noted that the same processing steps in the fifth procedure are assigned to the same or similar steps as those in the first procedures, and the duplicated description thereof is omitted (not described).

In the fifth procedure, while the calculation processing device 13 obtains this time measurement value(s) S₁, ---, Sₖ by performing the steps S11 and S12a as is the case with the first procedure, the calculation processing device 13 also obtains last time measurement value(s) S₁₁, ---, S₁ₖ by performing in the step 31a. The last time measurement data 35 are held in a memory in the calculation processing device 13 or a storage region being data-readably connected with the calculation processing device 13.

The steps S12 and S31a are completed, that is, after the calculation processing device 13 obtains both this time measurement value(s) S₁, ---, Sₖ and last time measurement value(s) S₁₁, ---, S₁ₖ, the calculation processing device 13 calculates the absolute value(s) D_{K} (herein, k is integer being satisfied with a condition 1 ≦ k ≦ n) of difference between this time measurement value(s) in each channel and last time measurement value(s) in the same channel of this time measurement value(s) (Step S32a). If each absolute value(s) D₁, ---, D_{K} of difference between k last time measurement value(s) and k this time measurement value(s), the absolute value(s) D₁, ---, D_{K} that is obtained in the step S32 is/are equal to or less than a determination threshold value δ (delta) (herein, δ is arbitrary positive number), that is, if a condition "|S₁ₖ-Sₖ| ≦ δ " is satisfied (in case of "YES" in Step S33a), the calculation processing device 13 determines that the water-level information which is/are based on the water-level measurement value(s) Sₖ in case of "YES" in Step S33a and is/are obtained by the monitoring device 12, is/are proper. As a result, the calculation processing device 13 determines that the water-level and temperature detection device 11 monitored by the monitoring device 12 that obtains water-level information determined as property, is normal as the water-level detection unit (Step S15a).

Meanwhile, as a result of comparing the absolute value(s) DK= |S₁ₖ-Sₖ| with the determination threshold value δ, if the absolute value(s) D_{K} is larger than the determination threshold value δ, that is, a condition " |S₁ₖ-Sₖ | > δ " is satisfied (in case of "NO" in Step S33a), the calculation processing device 13 determines that the water-level information which is/are based on the water-level measurement value(s) Sₖ in case of "NO" in Step S33a and is/are obtained by the monitoring device 12, is/are improper. As a result, the calculation processing device 13 determines that the water-level and temperature detection device 11 monitored by the monitoring device 12 that obtains water-level information determined as improperty, is abnormal (not normal) as the water-level detection unit (Step S16a).

Since the fifth procedure that compares this time measurement values with last time measurement values enables the water-level and temperature measurement apparatus 10 to find out whether dispersion of measurement values among measurement times is obviously present or not, the fifth procedure enables the water-level and temperature measurement apparatus 10 to find out abnormal state and presage thereof even if this time measurement values uniquely come close to abnormal value side. Therefore, the water-level and temperature measurement apparatus 10 can performs water-level and temperature detection function normal/abnormal determination of which reliability is higher than conventional water-level and temperature detection function normal/abnormal determination.

### (Sixth water-level and temperature detection function normal/abnormal determination procedure)

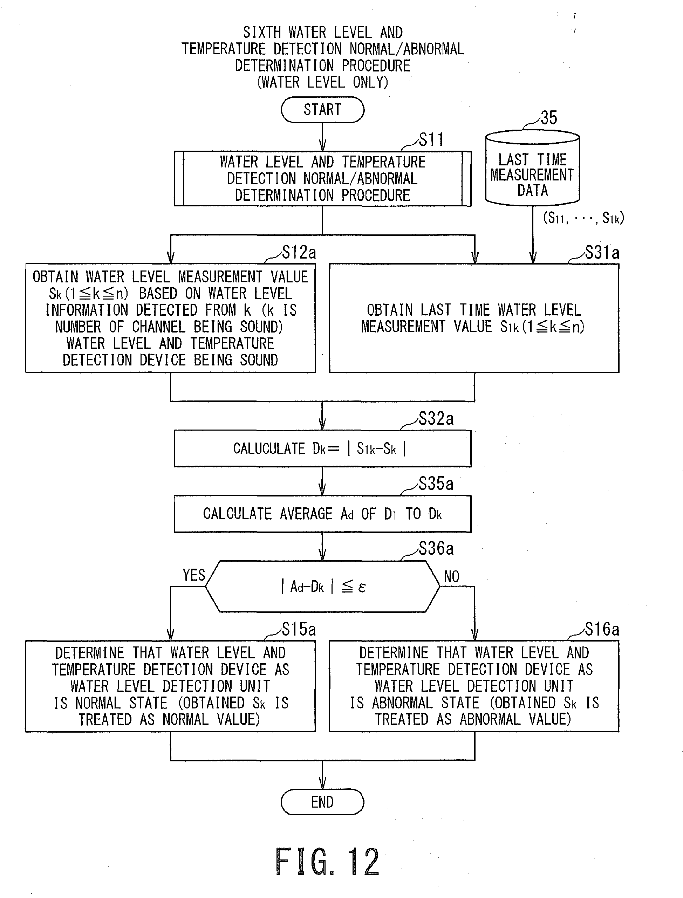

Fig. 12 is a flowchart which represents processing steps of sixth water-level and temperature detection function normal/abnormal determination procedure (water-level only).

The sixth procedure includes the same procedure as in the fifth procedure except determination steps performed with using the absolute value(s) D_{K}. For more detail, the sixth procedure is different from the fifth procedure in a point that the steps S34 and S35 (both steps S34a and S35a illustrated Fig. 12 and steps S34b and S35b being omitted (not illustrated) by substituting step numbers S34b and S35b for step numbers S34a and S35a illustrated Fig. 12) instead of the step S33 (both step S33a illustrated Fig. 11 and step S33b being omitted by substituting S33b for step numbers S33a illustrated Fig. 11) in the fifth procedure are performed in the sixth procedure. Thus, it is noted that the same processing steps in the sixth procedure are assigned to the same or similar steps as those in the fifth procedures, and the duplicated description thereof is omitted (not described).

In the sixth procedure, while the calculation processing device 13 obtains the absolute value(s) D_{K} (herein, k is integer being satisfied with a condition 1 ≦ k ≦ n) of difference between this time measurement value(s) in each channel and last time measurement value(s) in the same channel of this time measurement value(s) by performing the steps S11 to S32a as is the case with the fifth procedure. Then, the calculation processing device 13 calculates average A_{d} of absolute value(s) D₁, ---, D_{K} of difference between k last time measurement value(s) and this time measurement value(s), the absolute value(s) D₁, ---, D_{K} that is/are obtained in the step S32 (Step S35a).

Sequentially, as a result of comparing the average A_{d} with each absolute value(s) D₁, ---, D_{K}, if absolute value(s) of difference between the average A_{d} and each absolute value(s) D₁, ---, D_{K} is/are equal to or less than a determination threshold value ε (epsilon) (herein, ε is arbitrary positive number), that is, if a condition " |A_{d}-D_{K}| ≦ ε " is satisfied (in case of "YES" in Step S36a), the fifth procedure proceeds to the step S 15. The step S 15 and the steps being later than the step S15 in sixth procedure are substantially equal to the step S 15 and the steps being later than the step S 15 in the procedure including the step S15 and the steps being later than the step S15 such as the fifth procedure.

Meanwhile, as a result of comparing the average A_{d} with each absolute value(s) D₁, ---, D_{K}, if absolute value(s) of difference between the average A_{d} and each absolute value(s) D₁, ---, D_{K} is larger than the determination threshold value ε, that is, a condition " |A_{d}-D_{K}| > ε " is satisfied (in case of "NO" in Step S36a), the fifth procedure proceeds to the step S16. The step S16 and steps being later than the step S16 in sixth procedure are substantially equal to the step S16 and steps being later than the step S16 in the procedure including the step S16 and steps being later than the step S16 such as the fifth procedure.

The sixth procedure that compares this time measurement value(s) with last time measurement value(s), further calculates absolute value(s) of difference between this time measurement value(s) and last time measurement value(s), and further compares the absolute value(s) of difference with the average of absolute value(s) of difference can find out as well as determination result whether dispersion of measurement values among measurement times is obviously present or not. Therefore, in the water-level and temperature measurement apparatus 10 that performs the sixth procedure, reliability of water-level and temperature detection function normal/abnormal determination can be further increased.

As described above, according to the water-level and temperature measurement apparatus 10, since the water-level and temperature measurement apparatus 10 includes the water-level and temperature detection device 11 being multiplexed (redundant) as the water-level information detection unit and the temperature information detection unit, and has the function of determining whether each water-level and temperature detection device 11 is sound (normal) state or not (abnormal state), the water-level and temperature measurement apparatus 10 can exclude the water-level information and the temperature information obtained by the water-level information detection unit and the temperature information detection unit which are determined as abnormal state as well as reduce probability of losing the water-level information detection function and the temperature information detection in comparison to conventional water-level and temperature measurement apparatus. That is, it can be provided that a measurement apparatus has higher reliability of detecting and measuring water-level and temperature as well as higher operation reliability than conventional water-level and temperature measurement apparatus.

It is noted that the present invention is not limited to the above-described embodiments as they are and, in an implementation phase, can be embodied in various forms other than the specific embodiments described above. Various omissions, substitutions, and changes may be made without departing from the spirit and scope of the invention. These embodiments and modifications thereof are included within the sprit and scope of the invention and are included within the scope of the invention as disclosed in the claims and equivalents thereof.

### Reference Numerals

10 --- water-level and temperature measurement apparatus
11 ((111, ---, 11n) --- water-level and temperature detecting device
12 ((121, ---, 12n) --- monitoring device
13 --- calculation processing device
14 --- display device
15 ((151, ---, 15n) --- power source device
20 --- detection unit
21 --- sheath type thermocouple
22 --- temperature measurement contact
23 --- heater wire
24 --- accommodation tube
26 --- opening portion
27 --- protective tube
28 --- support member
29 --- hole portion
31 --- wire
35 --- last time measurement data

## Claims

1. A water-level and temperature measurement apparatus comprising:
a water-level detection unit that detects water-level at a plurality of water-level detection points, and includes a plurality of cannels of which the number is n;
a temperature detection unit that detects temperature at the plurality of water-level detection points, and includes the n cannels;
a thermocouple that is included in each cannel;
a heater wire that is included in each cannel;
a measurement device that receives water-level information of which the number is n from the water-level detection unit including the n channels and temperature information of which the number is n from the temperature detection unit including the n channels, in each cannel, and measures water-level of which the number is n and temperature of which the number is n, in each cannel;
abnormal determination device that respectively obtains electrical physical quantities from each thermocouple and each heater wire in each channel of the water-level detection unit and the temperature detection unit, and respectively determines whether detection function in each channel of the water-level detection unit and detection function in each channel of the temperature detection unit are lost or not based on the electrical physical quantities obtained from each thermocouple and each heater wire; and
processing device that obtains at least one water-level measurement result and at least one temperature measurement result by using results obtained by measuring water-level of which the number is n, results obtained by measuring temperature of which the number is n, results obtained by determining whether detection function in each channel of the water-level detection unit, and results obtained by determining whether detection function in each channel of the temperature detection unit.

2. The water-level and temperature measurement apparatus according to claim 1, wherein the at least one water-level measurement result is selected from residual water-level measurement result excluded water-level measurement result obtained on the basis of water-level information obtained from the channel of the water-level measurement device determining that own detection function is lost from the n water-level measurement results, and wherein the at least one temperature measurement result is selected from residual temperature measurement result excluded temperature measurement result obtained on the basis of temperature information obtained from the channel of the temperature measurement device determining that own detection function is lost from the n temperature measurement results.

3. The water-level and temperature measurement apparatus according to claim 1, wherein the electrical physical quantity obtained from the thermocouple is voltage difference between two wires that are a component of the thermocouple, and wherein the electrical physical quantity obtained from the heater wire is resistance of the heater wire.

4. The water-level and temperature measurement apparatus according to claim 3, wherein the abnormal determine device determines a water-level detection function in the channel and a temperature detection function in the channel in a case where voltage difference between the two wires that are the component of the thermocouple is not occurred.

5. The water-level and temperature measurement apparatus according to claim 4, wherein the abnormal determine device determines the water-level detection function in the channel in a case where voltage difference between the two wires that are the component of the thermocouple is occurred and the resistance value of the heater wire is larger than a set value.

6. The water-level and temperature measurement apparatus according to claim 2, wherein the at least one water-level measurement result is selected from a value that satisfies a condition where absolute value of difference between each residual water-level measurement result and an average of the residual water-level measurement result is equal to or less than a set value, and wherein the at least one temperature measurement result is selected from a value that satisfies a condition where absolute value of difference between each residual temperature measurement result and an average of the residual temperature measurement result is equal to or less than a set value.

7. The water-level and temperature measurement apparatus according to claim 3,
wherein the channel number n is larger than three or more,
wherein the at least one water-level measurement result is selected from a value obtained by excluding maximum and minimum values from values that satisfies a condition where absolute value of difference between each residual water-level measurement result and an average of the residual water-level measurement result is equal to or less than a set value, and
wherein the at least one temperature measurement result is selected from a value obtained by excluding maximum and minimum values from values that satisfies a condition where absolute value of difference between each residual temperature measurement result and an average of the residual temperature measurement result is equal to or less than a set value.

8. The water-level and temperature measurement apparatus according to claim 2,
wherein the at least one water-level measurement result is selected from water-level measurement results that are component of a combination satisfying a condition where a value obtained by calculating difference between two water-level measurement results with respect to all combinations in case of selecting two water-level measurement results from the residual water-level measurement result is equal to or less than a set value, and
wherein the at least one temperature measurement result is selected from temperature measurement results that are component of a combination satisfying a condition where a value obtained by calculating difference between two temperature measurement results with respect to all combinations in case of selecting two temperature measurement results from the residual temperature measurement result is equal to or less than a set value.

9. The water-level and temperature measurement apparatus according to claim 2,
wherein the at least one water-level measurement result is less one selected from two water-level measurement results that are component of a combination satisfying a condition where a value obtained by calculating difference between two water-level measurement results selected from the residual water-level measurement result is the least in values obtained by calculating difference between two water-level measurement results with respect to all combinations in case of selecting two water-level measurement results from the residual water-level measurement result, and
wherein the at least one water-level measurement result is larger one selected from two temperature measurement results that are component of a combination satisfying a condition where a value obtained by calculating difference between two temperature measurement results selected from the residual temperature measurement result is the least in values obtained by calculating difference between two temperature measurement results with respect to all combinations in case of selecting two temperature measurement results from the residual temperature measurement result.

10. The water-level and temperature measurement apparatus according to claim 1,
wherein the at least one water-level measurement result and the at least one temperature measurement result are respectively selected by further obtaining and using a last time water-level measurement result of which the number is n and a last time temperature measurement result of which the number is n,
wherein the at least one water-level measurement result is selected from a value that satisfies a condition where absolute value of difference between the water-level measurement result at this time and the last time water-level measurement result, with respect to a same channel, is equal to or less than a set value, and
wherein the at least one temperature measurement result is selected from a value that satisfies a condition where absolute value of difference between the temperature measurement result at this time and the last time temperature measurement result, with respect to the same channel, is equal to or less than a set value.

11. The water-level and temperature measurement apparatus according to claim 7,
wherein the at least one water-level measurement result is selected from the water-level measurement result that satisfies a condition where absolute value of difference between each absolute value of difference between the water-level measurement result of which the number is n, measured at this time and the water-level measurement result of which the number is n, measured at last time, with respect to a same channel, and average thereof, is equal to or less than a set value, and
wherein the at least one temperature measurement result is selected from the temperature measurement result that satisfies a condition where absolute value of difference between each absolute value of difference between the temperature measurement result of which the number is n, measured at this time and the temperature measurement result of which the number is n, measured at last time, with respect to the same channel, and average thereof, is equal to or less than a set value.

12. A water-level and temperature measurement apparatus comprising:
a water-level detection unit that detects water-level at a plurality of water-level detection points, and includes a plurality of cannels of which the number is n;
a temperature detection unit that detects temperature at the plurality of water-level detection points, and includes the n cannels;
a thermocouple that is included in each cannel;
a heater wire that is included in each cannel; and
abnormal determination device that respectively obtains electrical physical quantities from each thermocouple and each heater wire in each channel of the water-level detection unit and the temperature detection unit, and respectively determines whether detection function in each channel of the water-level detection unit and detection function in each channel of the temperature detection unit are lost or not based on the electrical physical quantities obtained from each thermocouple and each heater wire.
